(19) Europäisches Patentamt
European Patent Office
Office européen des brevets

(11) Veröffentlichungsnummer: **0 266 633 B1**

(12) # EUROPÄISCHE PATENTSCHRIFT

(45) Veröffentlichungstag der Patentschrift: **11.03.92**

(51) Int. Cl.[5]: **C08G 77/38**

(21) Anmeldenummer: **87115398.7**

(22) Anmeldetag: **21.10.87**

Die Akte enthält technische Angaben, die nach dem Eingang der Anmeldung eingereicht wurden und die nicht in dieser Patentschrift enthalten sind.

(54) **Verfahren zur Herstellung von SiH-Gruppen enthaltenden Organopolysiloxanen.**

(30) Priorität: **03.11.86 DE 3637273**

(43) Veröffentlichungstag der Anmeldung:
**11.05.88 Patentblatt 88/19**

(45) Bekanntmachung des Hinweises auf die Patenterteilung:
**11.03.92 Patentblatt 92/11**

(84) Benannte Vertragsstaaten:
**BE CH DE FR GB IT LI NL**

(56) Entgegenhaltungen:
**DE-A- 1 085 875**
**DE-A- 1 568 255**
**DE-A- 2 225 789**
**DE-A- 2 236 971**
**US-A- 3 419 592**

**TETRAHEDRON LETTERS, Band 25, Nr. 10, 1984, Seiten 1415-1416, Pergamon Press, Oxford; E. LUKEVICS et al.: "Ultrasound-induced heterogeneous reduction of halo, alkoxy and amino derivatives of group IVB elements with lithium aluminium hydride"**

**W. NOLL: "Chemie und Technologie der Silicone", 2. Auflage, 1968, Seiten 76-82, Verlag Chemie Weinheim**

(73) Patentinhaber: **Th. Goldschmidt AG**
**Goldschmidtstrasse 100 Postfach 101461**
**W-4300 Essen 1(DE)**

(72) Erfinder: **Koerner, Götz, Dr.**
**Kantorie 126**
**W-4300 Essen(DE)**
Erfinder: **Weitemeyer, Christian, Dr.**
**Sundernholz 67**
**W-4300 Essen(DE)**
Erfinder: **Wewers, Dietmar, Dr.**
**Fernewaldstrasse 194**
**W-4250 Bottrop(DE)**

EP 0 266 633 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Herstellung von SiH-Gruppen enthaltenden Organopolysiloxanen aus den entsprechenden Si-Halogen-Gruppen enthaltenden Organopolysiloxanen durch Umsetzung mit Metallhydriden in Abwesenheit von metallorganischen Verbindungen unter Rühren in einem flüssigen Reaktionsmedium.

In der US-A-3 099 672 ist ein Verfahren beschrieben, Halogen- oder Alkoxysilane mit Natriumhydrid bei einer Temperatur von 175 bis 350 ° C umzusetzen. Bei diesem Verfahren, das nur für Silane und nicht für Organopolysiloxane anwendbar ist, tritt mit unterschiedlicher Ausbeute an die Stelle der Halogen- oder Alkoxygruppe ein Wasserstoffatom.

Entsprechend der US-A-3 099 672 wird dabei das Natriumhydrid als solches, als Suspension in Mineralöl oder anderen hochsiedenden inerten Kohlenwasserstoffen oder in Form eines Überzuges auf Natriumchloridteilchen verwendet. Die Notwendigkeit der Anwendung relativ hoher Temperaturen verteuert das Verfahren und führt häufig zu unerwünschten Nebenprodukten.

In der US-A-3 535 092 ist ein Verfahren zur Umsetzung von Verbindungen, welche Si-Halogen-Gruppen aufweisen, mit Natriumhydrid beschrieben, welches bereits bei Raumtemperatur oder nur mäßig erhöhter Temperatur abläuft. Dies wird durch die Verwendung von speziellen Lösungsmitteln, wie Hexaalkylphosphoramiden, Octaalkylpyrophosphoramiden und Tetraalkylharnstoff ermöglicht. Die Alkylreste in dem Lösungsmittel enthalten 1 bis 4 Kohlenstoffatome. Der US-A-3 535 092 ist dabei zu entnehmen, daß diese Lösungsmittel katalytisch wirken sollen. Das Verfahren ist sowohl auf Halogensilane wie Halogensiloxane anwendbar. Alkoxysilane reagieren unter gleichen Bedingungen nicht. Da die Lösungsmittel hohe Siedepunkte aufweisen, werden die SiH-Gruppen aufweisenden Verfahrensprodukte aus dem Reaktionsgemisch abdestilliert. Hierdurch wird die Anwendbarkeit dieses Verfahrens auf solche SiH-Gruppen-haltigen Silane oder Siloxane beschränkt, die unter technisch vertretbarem Aufwand und ohne thermische Zersetzung abdestilliert werden können. Eine Entfernung der vorgenannten Lösungsmittel durch Auswaschen ist nicht ohne weiteres möglich. Beim Abtrennen der Lösungsmittel mit Wasser entsteht mit überschüssigem Natriumhydrid Natriumhydroxid, welches in dem wäßrigen Medium zur Bildung von SiOSi-Bindungen unter Abspaltung von Wasserstoff führt. Da die in dieser Patentschrift genannten Lösungsmittel aber physiologisch bedenklich sind, ist für die meisten Anwendungszwecke eine völlige Trennung der Si-haltigen Verfahrensprodukte von den Lösungsmitteln notwendige Voraussetzung.

Man hat zum Austausch von Si-Halogen-Gruppen durch SiH-Gruppen anstelle des Natriumhydrids auch bereits komplexe Hydride, wie z.B. Natriumaluminiumhydrid, verwendet. So ist in der DE-A-1 085 875 ein Verfahren zur Herstellung von Polysiloxanhydriden der allgemeinen Formel

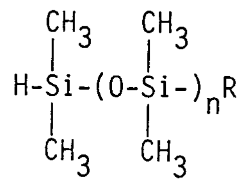

worin n eine ganze Zahl, insbesondere von 1 bis 5 ist und R Wasserstoff oder Alkyl- bzw. Arylreste bedeutet, beschrieben, welches dadurch gekennzeichnet ist, daß Polysiloxane der allgemeinen Formel

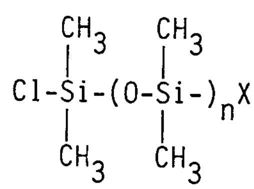

in der X Chlor oder Alkyl- bzw. Arylreste darstellt und n die obige Bedeutung hat, mit Lithiumaluminiumhydrid umgesetzt werden. Entsprechend den Beispielen der DE-A-1 085 875 wird 1,7-Dichloroctamethyltetrasiloxan mit Lithiumaluminiumhydrid in Tetrahydrofuran in 74 %iger Ausbeute in 1,7-Dihydrooctamethyltetrasiloxan überführt. Die Umwandlung von 1-Chlorpentamethyldisiloxan in 1-Hydropentamethyldisiloxan soll mit Lithiumaluminiumhydrid in 57 %iger Ausbeute erfolgen.

Wie aus "Polish Journal of Chemistry" 53 (1979) 1383 bis 1386 hervorgeht, hat eine Nacharbeitung des Verfahrens der DE-A-1 085 875 ergeben, daß konkurrierend zu dem Austausch der Si-Halogen-Gruppen SiOSi-Bindungen gespalten werden, so daß als Nebenprodukte in erheblichem Umfang Silane, wie z.B. das gasförmige und leicht entzündliche Dimethylsilan, gebildet werden. Dies steht in Übereinstimmung zu den Angaben in "Chemie und Technologie der Silicone" von W. Noll, Verlag Chemie, 1968, Seite 206. Dort ist ausgeführt, daß bei der Einwirkung von Lithiumaluminiumhydrid in Ether auf lineare Polydimethylsiloxane unter Abspaltung von Silanen Siloxanbindungen in Alumosiloxanbindungen überführt werden. Diese Spaltungsreaktion verläuft bei Kieselsäureestern praktisch quantitativ. Diese Spaltung von SiOSi-Bindungen durch Einwirkung von Lithiumaluminiumhydrid ist auch der Zeitschrift für Naturforschung, 10 b, (1955) 423 bis 424 zu entnehmen.

In der DE-A-1 568 255 ist ein ähnliches Verfahren beschrieben, bei dem als komplexes Aluminiumhydrid Trinatriumaluminiumhexahydrid verwendet wird. Auch bei Verwendung dieses komplexen Hydrides ist die Spaltung von SiOSi-Gruppen eine konkurrierende Reaktion.

In der US-A-3 419 592 ist ein Verfahren zur Herstellung von Wasserstoffsiloxanen beschrieben, bei dem man Halogensiloxane mit einer Kombination von Alkalimetallhydriden und Trialkylbor umsetzt.

Der Erfindung liegt die Aufgabe zugrunde, ein Verfahren zu finden, welches den Ersatz von Si-Halogen-Gruppen, insbesondere SiCl-Gruppen, durch SiH-Gruppen bei niedrigen Temperaturen, unter Verwendung physiologisch unbedenklicher Reaktionsmedien und chne nennenswerte Spaltung von SiOSi-Bindungen gestattet. Das Verfahren soll auf Organopolysiloxane mit Si-Halogen-Gruppen anwendbar sein, die ein beliebiges Molekulargewicht aufweisen und insbesondere höhermolekular sein können. Vorzugsweise soll das Verfahren mit $\alpha,\omega$-Halogen-organopolysiloxanen durchführbar sein, wobei insbesondere $\alpha,\omega$-Halogen-organopolysiloxane, die aufgrund ihres höheren Molekulargewichtes nicht destillierbar sind, von besonderem Interesse sind. Von besonderer Bedeutung sind dabei die $\alpha,\omega$-Chlor-organopolysiloxangemische, wie sie bei den bekannten technischen Verfahren in nicht destillierbarer Form anfallen.

Erfindungsgemäß gelingt überraschenderweise der Austausch von Si-Halogen-Gruppen durch SiH-Gruppen durch Umsetzung von Si-Halogen-Gruppen enthaltenden Organopolysiloxanen mit Metallhydriden in Abwesenheit von metallorganischen Verbindungen unter Rühren in einem flüssigen Reaktionsmedium bei einem Verfahren, welches durch die Kombination folgender Merkmale

a) Verwendung eines Metallhydrides aus der Gruppe LiH, NaH, KH, $CaH_2$ und $MgH_2$ in mindestens stöchiometrischer Menge, bezogen auf Si-Halogen-Gruppen des Organopolysiloxans,

b) Verwendung von Ethern als Reaktionsmedium,

c) kontinuierliche Entfernung des sich auf der Oberfläche der Metallhydridteilchen während der Umsetzung abscheidenden Metallhalogenids unter Bildung frischer Oberfläche durch Rühren in Gegenwart von Mahlkörpern oder durch Einwirkung von Ultraschall,

d) Aufarbeiten des Reaktionsgemisches durch Filtration und Abdestillieren des Lösungsmittels aus dem Filtrat,

gekennzeichnet ist.

Eine bevorzugte Ausführungsform des erfindungsgemäßen Verfahrens ist dadurch gekennzeichnet, daß man $\alpha,\omega$-Chlor-organopolysiloxane mit LiH in Tetrahydrofuran als Reaktionsmedium umsetzt.

Besonders bevorzugt werden als $\alpha,\omega$-Chlor-organopolysiloxane die $\alpha,\omega$-Dichlorpolydimethylsiloxane verwendet.

Entsprechend dem Merkmal a) werden Metallhydride aus der Gruppe LiH, NaH, KH $CaH_2$ und $MgH_2$ eingesetzt. Die Metallhydride können dem Reaktionsmedium in feinverteilter Form zugesetzt werden. Bevorzugt wird Lithiumhydrid verwendet.

Als Reaktionsmedium dienen entsprechend dem Merkmal b) Ether, wie sie aus dem Stand der Technik für derartige Verfahren bekannt sind. Besonders bevorzugt sind Ether der allgemeinen Formel

$$R^1O\text{-}CH_2CH_2O\text{-}(CH_2CH_2O\text{-})_nR^2$$

n ist gleich 0 oder eine ganze Zahl, vorzugsweise eine Zahl von 1 bis 10. Besonders bevorzugt sind Verbindungen, bei denen n = 0 ist. $R^1$ und $R^2$ sind gleich oder verschieden und bedeuten Alkylgruppen mit 1 bis 4 Kohlenstoffatomen. Beispiele derartiger Ether, welche unter die vorgenannte Formel fallen, sind 1,2-Dimethoxyethan, Diethylenglykoldimethylether, 1,2-Diethoxyethan, Diethylenglykoldiethylether, Triethylenglykoldimethylether, Tetraethylenglykoldimethylether.

Als Ether können auch cyclische Ether, wie Tetrahydrofuran oder Dioxan oder die polymeren Verbindungen des Tetrahydrofurans verwendet werden, wobei Tetrahydrofuran bevorzugt ist.

Von außerordentlicher Bedeutung ist das Merkmal c) des erfindungsgemäßen Verfahrens. Bei der Reaktion der unter a) aufgeführten Metallhydride in einem unter b) genannten Reaktionsmedium mit einem Si-Halogen-Gruppen enthaltenden Organopolysiloxan unter Rühren findet selbst bei erhöhten Temperaturen innerhalb wirtschaftlich vertretbarer Zeit kein nennenswerter oder ausreichender Umsatz statt. Rührt man jedoch z.B. in Gegenwart von Mahlkörpern, ist der Umsatz auch bei mäßigen Temperaturen quantitativ, was für den Fachmann nicht vorhersehbar war. Derartige, meist kugelförmige Mahlkörper können aus Glas, Keramik oder Stahl bestehen. Es ist auch möglich, feinkörnige Mahlkörper, z.B. Sand, zu verwenden. Ein weiteres Beispiel für die Einwirkung von mechanischer Energie auf das Reaktionsgemisch ist die Verwendung von Rührern, welche im Reaktionsgemisch hohe Scherkräfte erzeugen. Geeignet sind beispielsweise Rührer, welche innerhalb eines Stators einen oder mehrere schnellaufende Rotoren aufweisen. Geeignet sind ferner hochtourige Rührer mit sogenannten Mizer-Scheiben. Zur Einwirkung von mechanischer Energie auf das Reaktionsgemisch sind vorzugsweise Kugelmühlen geeignet. Es ist ferner möglich, die abgeschiedenen Metallhalogenide von der Oberfläche der Metallhydridteilchen durch Einwirkung von Ultraschall zu entfernen. Dabei können die aus dem Stand der Technik bekannten Ultraschallgeber verwendet werden.

Das erfindungsgemäße Verfahren läuft bereits bei Raumtemperatur mit quantitativen Ausbeuten ab. Die Reaktionsgeschwindigkeit kann durch Erhöhung der Temperatur des Reaktionsmediums noch weiter beschleunigt werden. Jedoch empfiehlt es sich aus wirtschaftlichen Gründen und um eine mögliche Bildung von Nebenprodukten zu vermeiden, Reaktionstemperaturen von etwa 160 °C nicht zu überschreiten. In den meisten Fällen wird die Obergrenze der Reaktionstemperatur durch den Siedepunkt des Reaktionsmediums gegeben.

Die Metallhydride werden in mindestens stöchiometrischer Menge, bezogen auf Si-Halogen-Gruppen des Organopolysiloxans, eingesetzt. Es empfiehlt sich jedoch, einen Überschuß von etwa 10 %, bezogen auf stöchiometrische Menge, einzusetzen. Ein höherer Überschuß beschleunigt zwar die Reaktion, wirft aber auch Schwierigkeiten bei der Beseitigung des Rückstandes auf.

Nach der Umsetzung, die innerhalb eines Zeitraums von einigen Stunden beendet ist, erfolgt die Aufarbeitung des Reaktionsgemisches in an sich bekannter Weise. So wird man im allgemeinen das gebildete Metallhalogenid und gegebenenfalls überschüssiges Metallhydrid sowie die gegebenenfalls im Reaktionsmedium enthaltenen Mahlkörper durch Filtration entfernen und das verwendete Lösungsmittel durch Destillation von Filtrat abtrennen.

Das erfindungsgemäße Verfahren verläuft weitgehend quantitativ und erfüllt somit die eingangs gestellten Bedingungen. Das Verfahren ist weitgehend von der Struktur der Halogen-organopolysiloxane unabhängig. Es ermöglicht insbesondere den Austausch der $\alpha,\omega$-ständigen und an Si gebundenen Halogenatome und ist gleichermaßen auf niedrig- und höhermolekulare Halogen-organopolysiloxane anwendbar. Vorzugsweise verwendet man äquilibrierte Halogenorganopolysiloxane, bei deren Äquilibrierung als Katalysatoren Lewis-Säuren, vorzugsweise $FeCl_3$, eingesetzt worden sind. Weniger geeignet sind mit Schwefelsäure äquilibrierte Halogenorganopolysiloxane, da bei der Umsetzung mit Alkali- oder Erdalkalihydriden im Siloxan enthaltene Silylsulfatgruppen zu Silylmercaptogruppen reduziert werden können, die unangenehm riechen.

Das erfindungsgemäße Verfahren wird anhand der folgenden Beispiele noch näher erläutert.

Beispiel 1

In einer Apparatur, bestehend aus einem 500-ml-Vierhalsplanschliffkolben, der mit einem Tropftrichter, Innenthermometer, Rührer und Rückflußkühler ausgestattet und an eine Kühlfalle (-78 °C) angeschlossen ist, werden 8,7 g (1,1 Mol) LiH, 100 g Tetrahydrofuran und 200 g Keramikkugeln mit einem Durchmesser von 2 mm unter Stickstoff vorgelegt. 280,1 g (0`5 Mol) $\alpha,\omega$-Dichlorpolydimethylsiloxan werden unter Rühren der LiH-Suspension zügig zugetropft. Die Abnahme des an Silicium gebundenen Chlors wird acidimetrisch verfolgt. Nach 8 Stunden Erhitzen unter Rückfluß (67 °C) ist kein an Silicium gebundenes Chlor mehr nachweisbar. Während der Reaktion werden keine flüchtigen Verbindungen in der Kühlfalle aufgefangen. Das erhaltene Reaktionsgemisch (586,1 g) wird durch Filtration von den Keramikkugeln, dem entstandenen LiCl und dem nicht umgesetzten LiH getrennt. Der verbleibende Filterrückstand wird dreimal mit 20 g Tetrahydrofuran gewaschen, wobei insgesamt 337,1 g wasserklares Filtrat erhalten werden. Nach dem destillativen Abtrennen von 125,3 g Tetrahydrofuran bei 40 °C/6 mbar und einer anschließenden Filtration werden 209,8 g $\alpha,\omega$-Diwasserstoffpolydimethylsiloxan, entsprechend 85 % der Theorie, erhalten.

Die Wasserstoffbestimmung ergibt 0,39 % Wasserstoff. Die Daten der $^1$H-NMR-Analyse unter Verwendung von $CDCl_3$ sind wie folgt:
= 0,05 ppm (Singulett, 30,7 H) $-OSi(CH_3)_2-$,
= 0,2 ppm (Dublett, 12 H) $H-Si(CH_3)_2-$,
= 4,7 ppm (Septett, 2 H) $H-Si(CH_3)_2-$.

Die gaschromatographisch ermittelte Verteilung des $\alpha,\omega$-Diwasserstoffpolydimethylsiloxans entspricht weitgehend der des eingesetzten $\alpha,\omega$-Dichlorpolydimethylsiloxans.

Beispiel 2

In einer Apparatur, bestehend aus einem in einem Ultraschallbad befindlichen 500-ml-Dreihalskolben, der mit einem Tropftrichter, Innenthermometer und Rückflußkühler ausgestattet ist, werden 6,6 g LiH und 150 g Diethylether unter Stickstoff vorgelegt. 150,8 g 1,5-Dibrom-1,1,3,3,5,5-hexamethyltrisiloxan werden bei eingeschaltetem Ultraschallbad langsam zugetropft. Nach 6 Stunden Erhitzen unter Rückfluß ist kein Ausgangsprodukt gaschromatographisch mehr nachweisbar. Das erhaltene Reaktionsgemisch wird filtriert und nach dem Entfernen des Diethylethers über eine Kolonne mit etwa 8 theoretischen Böden destilliert. Bei 128 °C unter normalem Druck gehen 69,1 g (80,4 %) 1,1,3,3,5,5-Hexamethyltrisiloxan über.

Beispiel 3

In ein Gefäß, bestehend aus einem 1-1-Dreihalskolben, der mit einem Tropftrichter, Rückflußkühler und einem Rührsystem mit Rotor- und Statorstufen ausgestattet ist, werden 45,6 g (1,9 Mol) NaH und 150 g Diethylenglykoldimethylether unter Stickstoff vorgelegt. Bei laufendem Rührsystem werden 280,1 g (0,5 Mol) α,ω-Dichlorpolydimethylsiloxan zügig zugegeben. Die Einwirkung des Rührsystems führt zu einer Selbsterwärmung des Reaktionsgemisches. Nach 10stündigem Sieden unter Rückfluß läßt sich ein 98 %iger Umsatz zum α,ω-Diwasserstoffpolydimethylsiloxan nachweisen.

Vergleichsbeispiel 1
(nicht erfindungsgemäß)

Der in Beispiel 1 beschriebene Versuch wird ohne Verwendung von Tetrahydrofuran wiederholt. Nach 8 Stunden bei 67 °C kann acidimetrisch ein 1 %iger Umsatz und nach 48 Stunden ein 1,8 %iger Umsatz nachgewiesen werden.

Vergleichsbeispiel 2
(nicht erfindungsgemäß)

Der in Beispiel 1 beschriebene Versuch wird ohne Verwendung der Mahlkörper wiederholt. Nach 48 Stunden Sieden unter Rückfluß kann acidimetrisch ein Umsatz von 24 % nachgewiesen werden.

Aus den Vergleichsbeispielen 1 und 2 ist zu ersehen, daß bei Fehlen eines der erfindungsgemäßen Kombinationsmerkmale die Herstellung von SiH-Gruppen enthaltenden Organopolysiloxanen aus den entsprechenden Si-Halogen-Gruppen enthaltenden Organopolysiloxanen durch Umsetzung mit Metallhydriden nicht möglich ist.

**Patentansprüche**

**1.** Verfahren zur Herstellung von SiH-Gruppen enthaltenden Organopolysiloxanen aus den entsprechenden Si-Halogen-Gruppen enthaltenden Organopolysiloxanen durch Umsetzung mit Metallhydriden in Abwesenheit von metallorganischen Verbindungen unter Rühren in einem flüssigen Reaktionsmedium, gekennzeichnet durch die Kombination folgender Merkmale

a) Verwendung eines Metallhydrides aus der Gruppe LiH, NaH, KH, $CaH_2$ und $MgH_2$ in mindestens stöchiometrischer Menge, bezogen auf Si-Halogen-Gruppen des Organopolysiloxans,

b) Verwendung von Ethern als Reaktionsmedium,

c) kontinuierliche Entfernung des sich auf der Oberfläche der Metallhydridteilchen während der Umsetzung abscheidenden Metallhalogenids unter Bildung frischer Oberfläche durch Rühren in Gegenwart von Mahlkörpern oder durch Einwirkung von Ultraschall,

d) Aufarbeiten des Reaktionsgemisches durch Filtration und Abdestillieren des Lösungsmittels aus dem Filtrat.

**2.** Verfahren nach Anspruch 1, dadurch gekennzeichnet, daß man α,ω-Chlor-organopolysiloxane mit LiH in Tetrahydrofuran als Reaktionsmedium umsetzt.

**3.** Verfahren nach Anspruch 2, dadurch gekennzeichnet, daß man α,ω-Dichlorpolydimethylsiloxane mit LiH in Tetrahydrofuran umsetzt.

**4.** Verfahren nach einem oder mehreren der vorhergehenden Ansprüche, dadurch gekennzeichnet, daß man Halogenorganopolysiloxane verwendet, welche in Gegenwart von Lewis-Säuren, vorzugsweise $FeCl_3$, äquilibriert worden sind.

**5.** Verfahren nach einem oder mehreren der vorhergehenden Ansprüche, dadurch gekennzeichnet, daß man gemäß Merkmal c) eine Kugelmühle verwendet.

**Claims**

**1.** Process for the preparation of organopolysiloxanes containing SiH groups from the corresponding organopolysiloxanes containing Si-halogen groups by reaction with metal hydrides in the absence of organometallic compounds with stirring in a liquid reaction medium, characterised by the combination of the following features

a) use of a metal hydride from the group comprising LiH, NaH, KH, $CaH_2$ and $MgH_2$ in an at least stoichiometric amount, based on the Si-halogen groups of the organopolysiloxane,

b) use of ethers as the reaction medium,

c) continuous removal of the metal halide which deposits on the surface of the metal hydride particles during the reaction, with formation of a fresh surface by stirring in the presence of grinding elements or by the action of ultrasound,

d) work-up of the reaction mixture by filtration and removal of the solvent from the filtrate by distillation.

**2.** Process according to Claim 1, characterised in that α,ω-chloroorganopolysiloxanes are reacted with LiH in tetrahydrofuran as the reaction medium.

**3.** Process according to Claim 2, characterised in

that α,ω-dichloropolydimethylsiloxanes are reacted with LiH in tetrahydrofuran.

**4.** Process according to one or more of the preceding claims, characterised in that haloorganopolysiloxanes are used which have been equilibrated in the presence of Lewis acids, preferably $FeCl_3$.

**5.** Process according to one or more of the preceding claims, characterised in that, in accordance with feature c), a ball mill is used.

**Revendications**

**1.** Procédé de préparation d'organopolysiloxanes contenant des groupes SiH, à partir des organopolysiloxanes correspondants, contenant des groupes Si-halogène, par réaction avec des hydrures de métal, en l'absence de composés organométalliques, sous agitation dans un milieu de réaction liquide, caractérisé par la combinaison des caractéristiques suivantes :

a) utilisation d'un hydrure de métal du groupe LiH, NaH, KH, $CaH_2$ et $MgH_2$ en quantité au moins stoechiométrique par rapport aux groupes Si-halogène de l'organopolysiloxane,

b) utilisation d'éthers comme milieu de réaction,

c) élimination continue de l'halogénure de métal qui se dépose à la surface des particules d'hydrure de métal pendant la réaction, avec formation d'une surface neuve, par agitation en présence d'éléments broyeurs ou sous l'action d'ultrasons,

d) retraitement du mélange réactionnel par filtration, et séparation par distillation du solvant du filtrat.

**2.** Procédé selon la revendication 1, caractérisé en qu'on fait réagir des α,ω-chloro-organopolysiloxanes avec du LiH dans du tétrahydrofuranne comme milieu de réaction.

**3.** Procédé selon la revendication 2, caractérisé en ce qu'on fait réagir des α,ω-dichloropolydiméthylsiloxanes avec du LiH dans du tétrahydrofuranne.

**4.** Procédé selon l'une ou plusieurs des revendications précédentes, caractérisé en ce qu'on utilise des halogéno-organopolysiloxanes qu'on a équilibrés en présence d'acides de Lewis, de préférence en présence de $FeCl_3$.

**5.** Procédé selon l'une ou plusieurs des revendications précédentes, caractérisé en ce qu'on utilise un broyeur à boulets, conformément à la caractéristique c).